# EUROPÄISCHE PATENTSCHRIFT

(11) **EP 0 431 366 B1**
(45) Veröffentlichungstag und Bekanntmachung des Hinweises auf die Patenterteilung: **21.06.1995**
(21) Anmeldenummer: 90121924.6
(22) Anmeldetag: 16.11.1990
(51) Int. Cl.: G11B 15/18

(54) **Videorecorder mit automatischer Standbildpositionierung**
Videorecorder with automatic still picture positioning
Magnétoscope à positionnement automatique d'image fixe

(30) Priorität: 08.12.1989 DE 3940639
(43) Veröffentlichungstag der Anmeldung: 12.06.1991
(73) Patentinhaber: Nokia (Deutschland) GmbH, 75175 Pforzheim (DE)
(72) Erfinder: Apitz, Siegfried, Dipl.-Ing., W-7542 Schömberg-Bieselsberg (DE)

(56) Entgegenhaltungen:
- DE-A- 3 105 573
- PATENT ABSTRACTS OF JAPAN vol. 9, no. 75 (E-306)(1798) 04 April 1985,& JP-A-59 210779 (MITSUMI DENKI) 29 November 1984,
- IEEE TRANSACTIONS ON CONSUMER ELECTRONICS. vol. CE-26, no. 1, Februar 1980, NEW YORK US, Seiten 121 - 128; NOBUO AZUMA: "MICROPROCESSOR CONTROLLED VARIABLE PLAY-BACK SPEED SYSTEM FOR VIDEO TAPE RECORDER"

## Beschreibung

Die Erfindung betrifft einen Videorecorder mit automatischer Standbildpositionierung. Wird ein derartiger Videorecorder von Laufbildwiedergabe auf Standbildwiedergabe umgeschaltet, versucht eine Bandlaufsteuereinrichtung, die Bandposition automatisch auf eine Bandposition einzustellen, für die optimale Standbildwiedergabe erwartet wird.

### STAND DER TECHNIK

Zum Vorgeben der Bandposition, für die optimale Standbildwiedergabe erwartet wird, sind Videorecorder mit zwei unterschiedlichen Prinzipien bekannt. Beim einen Prinzip wird davon ausgegangen, daß die optimale Position um ein vorgegebenes Bandstück hinter einem CTL-Puls liegt. Sowie die Bandlaufsteuereinrichtung auf Standbildbetrieb umgeschaltet ist, versucht sie, das Band so anzuhalten, daß es möglichst genau an der eben beschriebenen Bandposition anhält. Das andere Prinzip geht dahin, bei stehendem Band Pegel der Hüllkurve eines durch die Leseköpfe gelesenen FM-Signales zu erfassen und diese durch Vergleich mit Pegel-Sollwerten zum Bestimmen eines Bandpositions-Korrekturwertes zu verarbeiten. Videorecorder, die nach diesem Prinzip arbeiten, weisen folgende Funktionsgruppen auf:
- eine Bandlaufsteuereinrichtung
   -- zum Steuern der Laufgeschwindigkeit eines Magnetbandes, auf dem Schrägspuren aufgezeichnet sind, u. a. abhängig von Kopfumschaltpulsen, die nach jeweils 180° Umdrehung einer mit Leseköpfen versehenen Kopftrommel ausgegeben werden,
   -- zum Erfassen von Pegeln der Hüllkurve eines durch die Leseköpfe gelesenen FM-Signales bei mehreren vorgegebenen Winkellagen der Köpfe in bezug auf die Kopfumschaltpulse,
   -- zum Berechnen von Bandpositions-Korrekturwerten für Standbildwiedergabe aus Abweichungen zwischen den gemessenen Standbildpegeln und Pegel-Sollwerten für die vorgegebenen Winkellagen,
   -- und zum Ausführen von Bandpositionskorrekturen bei Standbildbetrieb, abhängig vom jeweiligen Bandpositions-Korrekturwert,
- und einer Umschalteinrichtung zum Umschalten der Bandlaufsteuereinrichtung zwischen Laufbildbetrieb und Standbildbetrieb.

Solch ein Videorecorder ist z.B. in JP-59-210 779 beschrieben.

Bei derartigen Videorecordern bestehen noch Unterschiede dahingehend, wann die Positionskorrektur mit Hilfe des berechneten Bandpositions-Korrekturwertes ausgeführt wird. Bei der einen Art wird vorausgesetzt, daß der Benutzer um ein Standbild weiterschaltet, wenn er mit dem aktuellen Standbild nicht zufrieden ist. Beim Weiterschalten wird dann das Band nicht um eine Spurbreite verschoben, sondern um eine Spurbreite zuzüglich oder abzüglich dem Korrekturwert. Bei der anderen Art derartiger Videorecorder wird das Verstellen um den eben genannten Weg automatisch vorgenommen, wenn festgestellt wird, daß der Bandpositions-Korrekturwert einen vorgegebenen Schwellenwert übersteigt. Das automatische Weiterschalten wird jedoch abgebrochen, wenn nach mehreren Versuchen, z. B. fünf Versuchen, der Bandpositions-Korrekturwert immer noch über dem Schwellenwert liegt.

Bei allen bekannten Videorecordern mit automatischer Standbildpositionierung zeigt es sich, daß die optimale Standbildposition nur selten richtig angefahren wird, was auch dann gilt, wenn mehrere aufeinanderfolgende Versuche, sei es automatisch oder ausgelöst durch den Benutzer, ausgeführt werden. Videorecorder verfügen daher üblicherweise noch über einen Einstellknopf, durch dessen Betätigen die Bandposition stufenlos relativ zur Kopftrommel geändert werden kann.

### DARSTELLUNG DER ERFINDUNG

Der erfindungsgemäße Videorecorder weist die oben aufgelisteten Merkmale eines Videorecorders auf, der nach dem zweiten genannten Prinzip arbeitet. Die Bandlaufsteuereinrichtung ist jedoch so ausgebildet, daß sie
-- im Laufbildbetrieb die Pegel der FM-Signal-Hüllkurve bei den vorgegebenen Winkellagen erfaßt,
-- und die Pegel-Sollwerte aus diesen gemessenen Laufbildpegeln berechnet.

Der Erfindung liegt die Erkenntnis zugrunde, daß die von benachbarten Spuren im Laufbildbetrieb gelesenen FM-Signale nicht immer gleiche Amplitude aufweisen, obwohl Videorecorder so aufgebaut sind, daß dies eigentlich der Fall sein sollte. Die Unterschiede rühren von Streuungen in den Schreib- und Lesekopfeigenschaften, von Streuungen in den Bandeigenschaften und von zeitlichen Änderungen der Bandeigenschaften her, z. B. unterschiedlichen Dehnungen bei Aufnahme und Wiedergabe, abhängig von der jeweiligen Temperatur. Werden nun, bei bekannten Videorecordern, für Standbildpegel bestimmte Werte oder Werteverhältnisse ausgehend von der Annahme konstanter Laufbildpegel erwartet, geht diese Erwartung nur in Erfüllung, wenn tatsächlich an einer Bandstelle angehalten wird, bei der im Laufbildbetrieb ein konstanter Pegel für das FM-Signal von allen Spuren vorliegt. In allen anderen Fällen führt das Einstellen der Bandposition so, daß die erwarteten Pegel erreicht werden, zu einer nicht optimalen Bandposition. Dies ist beim erfindungsgemäßen Videorecorder anders, da hier die erwarteten Standbildpegel, also die Pegel-Sollwerte, aus Pegeln berechnet werden, die im Laufbildbetrieb bei denjenigen Winkellagen der Köpfe in bezug auf die Kopfumschaltpulse erfaßt werden, bei denen auch im Standbildbetrieb gemessen wird. Es sei darauf hingewiesen, daß die genannte Verbesserung auch dann besteht, wenn bereits davon ausgegangen wird, daß für die FM-Signale von unterschiedlichen Spuren unterschiedliche Pegel zu erwarten sind. Die bekannten Videorecorder gehen in diesem Fall von einem konstanten, von Eins abweichenden Verhältnis aus, während beim erfindungsgemäßen Videorecorder die Pegel-Sollwerte entsprechend dem jeweils aktuellen tatsächlichen Verhältnis der Pegel bei Laufbildbetrieb geändert werden.

### KURZE BESCHREIBUNG DER FIGUREN

- Fig. 1: Blockschaltbild einer Umschalteinrichtung und einer Bandlaufsteuereinrichtung für automatische Standbildpositionierung unter Berücksichtigung von Pegeln der FM-Signal-Hüllkurve bei Laufbildbetrieb;
- Fig. 2.SS2 und 2.SS1: schematische Darstellungen von jeweils zwei benachbarten Schrägspuren, die bei Standbildbetrieb entlang einer einzigen Lesespur zeitlich aufeinanderfolgend von zwei Leseköpfen abgetastet werden, wobei die Lesespur deckungsgleich mit einer der Schreibspuren beginnt;
- Fig. 3.SS2 und 3.SS1: schematische Darstellungen ähnlich denen der Fig. 2, wobei jedoch die Lesespur versetzt zu den Schreibspuren beginnt;
- Fig. 4a - 4f: zeitkorrelierte Diagramme zum Veranschaulichen der Formen von Signalen, die für die Funktion der Schaltung gem. Fig. 1 von Bedeutung sind; und
- Fig. 5: Flußdiagramm zum Veranschaulichen der Funktion der in Fig. 1 als Blockschaltbild dargestellten Schaltung.

### WEGE ZUM AUSFÜHREN DER ERFINDUNG

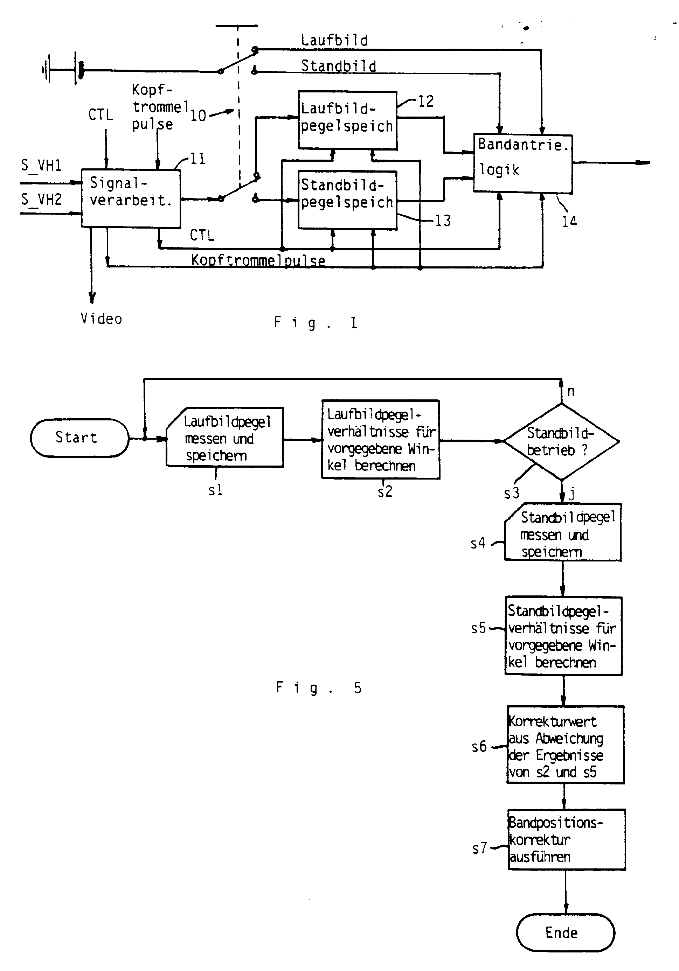

Die in Fig. 1 als Blockschaltbild dargestellte Schaltung ist bei einem Ausführungsbeispiel als Mikroprozessor realisiert, insoweit logische Signalverarbeitungen und Speicheraufgaben betroffen sind. Die Schaltung verfügt über eine Umschalteinrichtung 10 und eine Bandlaufsteuereinrichtung, die eine Signalverarbeitungseinrichtung 11, einen Laufbildpegelspeicher 12, einen Standbildpegelspeicher 13 und eine Bandantriebslogik 14 aufweist.

Der Signalverarbeitungseinrichtung 11 werden ein Signal S_VH1 von einem ersten Videokopf und ein Signal S_VH2 von einem zweiten Videokopf, das CTL-Signal und Kopftrommelpulse zugeführt. Die Signalverarbeitungseinrichtung 11 gibt ein Videosignal aus, dessen Weiterverarbeitung hier jedoch nicht interessiert. Außerdem wird ein Signal ausgegeben, das den jeweiligen Pegel der FM-Hüllkurve darstellt. Dieses Signal gelangt entweder an den Laufbildpegelspeicher 12 oder an den Standbildpegelspeicher 13, je nach Stellung der Umschalteinrichtung 10. Die letztere Einrichtung schaltet jedoch nicht nur das genannte Pegelsignal um, sondern sie zeigt auch der Bandantriebslogik 14 an, ob Laufbildbetrieb oder Standbildbetrieb auszuführen ist. Sowohl der Laufbildpegelspeicher 12 wie auch der Standbildpegelspeicher 13 und die Bandantriebslogik 14 erhalten die CTL-Pulse und die Kopftrommelpulse. Die Bandantriebslogik 14 gibt nach Verarbeiten aller genannten Signale Bandsteuersignale an einen nicht dargestellten Bandantrieb aus.

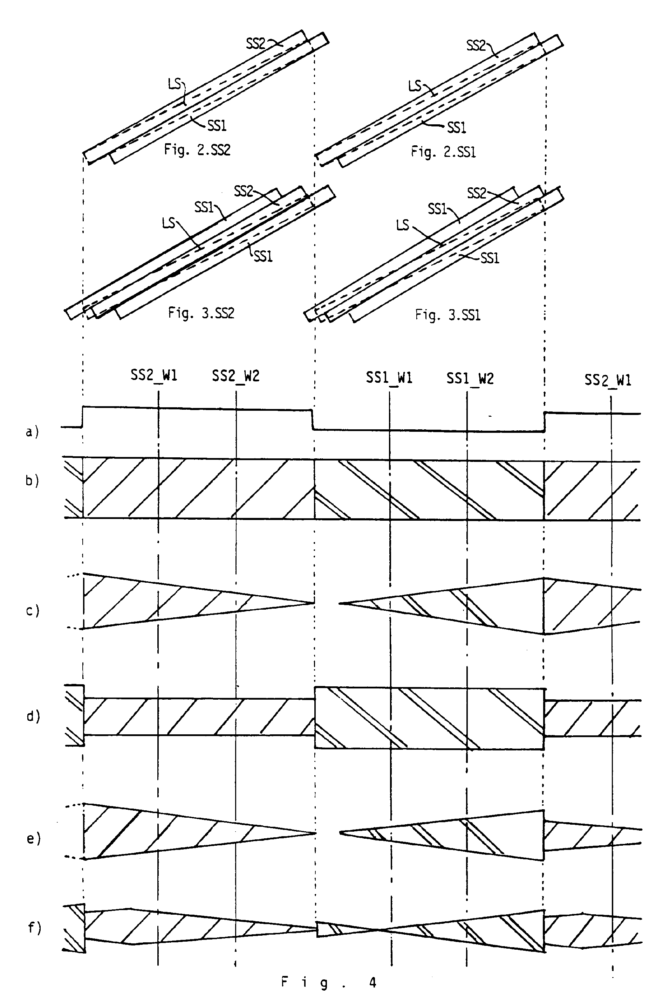

Die Funktion eines Videorecorders mit einer Schaltung, die dem eben beschriebenen Blockschaltbild genügt, wird nun anhand der Fig. 2 - 5 beschrieben.

Die Fig. 2.SS2 und 2.SS1 zeigen jeweils zwei benachbarte Schrägspuren SS1 und SS2 sowie eine Lesespur LS. Da Standbildbetrieb angenommen ist, deckt sich bei beiden Figuren die Lesespur nicht mit einer der beiden Schrägspuren, sondern sie verläuft schräg zu diesen. Dabei beginnt die Lesespur LS immer deckungsgleich mit der oberen Schreibspur SS2 und endet deckungsgleich mit der unteren Schreibspur SS1. Die Fig. 2.SS2 und 2.SS1, wie auch die weiter unten erläuterten Fig. 3.SS2 und 3.SS1 beruhen auf der Voraussetzung, daß die Lesespur gleich breit ist wie jede Schrägspur und daß beide Leseköpfe genau entlang derselben Lesespur laufen. In der Praxis ist es jedoch so, daß die Lesespur des einen Kopfs geringfügig breiter und die Lesespur des anderen Kopfes erheblich breiter, typischerweise etwa 40 - 50 % breiter ist, als es der Breite einer Schrägspur entspricht. Dabei decken sich die oberen Kanten der Lesespuren der zwei Köpfe. Die genannten, von der Praxis abweichenden Annahmen sind getroffen, um bei der noch zu erläuternden Darstellung gemäß Fig. 4 nicht zu komplizierte Signalformen zu erhalten. Das Funktionsprinzip der erläuterten Schaltung ist unabhängig davon, wie die Lesespuren nach Lage und Breite konkret relativ zu den Schrägspuren verlaufen.

Fig. 4a stellt den Verlauf von Kopfumschaltpulsen dar. Es ist angenommen, daß dieses Signal auf hohem Pegel liegt, wenn derjenige Kopf aktiviert ist, der bei Laufbildbetrieb zum Lesen von Spuren SS2 aktiviert ist, während das Signal niedrigen Pegel einnimmt, wenn der Kopf zum Lesen von Schrägspuren SS1 aktiviert ist.

Fig. 4b zeigt den Verlauf der Hüllkurve des FM-Signales bei Laufbildbetrieb. Die Fläche innerhalb der Hüllkurve ist für das Signal zur Spur SS2 einfach schraffiert ausgefüllt, während sie für das Signal zur Spur SS1 doppelt schraffiert ausgefüllt ist. Es ist der angestrebte Idealfall dargestellt, daß nämlich der Pegel des Hüllkurvensignals dauernd konstant ist.

Fig. 4c zeigt den Verlauf der Hüllkurven im Standbildbetrieb, also in demjenigen Betrieb, bei dem die Lesespur LS schräg zu den Schrägspuren SS1 und SS2 verläuft, wie in Fig. 2 dargestellt. Aus Fig. 2.SS2 ist ersichtlich, daß das von der Spur SS2 gelesene Signal mit Beginn dieser Spur maximalen Pegel aufweist, der dann auf Null abfällt, und zwar bevor das Ende der Spur SS2 erreicht ist. Dagegen ist der Pegel der Hüllkurve des FM-Signales, wie es von Spur SS1 gelesen wird (siehe Fig. 2.SS1), zunächst einige Zeit nach dem Aktivieren des Kopfes, der der Schrägspur SS1 zugeordnet ist, Null und steigt dann bis kurz vor Ende der Aktivierungszeit des genannten Kopfes. In der Praxis ist die Zeitspanne, innerhalb der der Hüllkurvenpegel Null ist, sehr viel kürzer, bezogen auf die Zeitspanne zwischen zwei Kopfumschaltpulsen, als dies aus Fig. 4a hervorgeht. Der große Versatz in Fig. 4c rührt daher, daß in der zugehörigen Fig. 2.SS1 die Spurbreiten um ein Vielfaches zu breit im VErhältnis zu den Spurlängen gezeichnet sind.

In den zeitkorrelierten Fig. 3a - 3f sind Meßzeitpunkte SS2_W2, SS1_W1 und SS1-W2 eingezeichnet. Der Zeitpunkt SS2-W1 entspricht einer Winkellage der Kopftrommel bezogen auf die ansteigende Flanke des zugehörigen Kopfumschaltpulses für den Kopf zum Lesen von Spuren SS2. Die Bedeutungen der anderen Zeitpunkte gehen aus deren Indizierung hervor. Die Zeitpunkte SS2_W1 und SS2_W2 teilen die Zeitdauer des Kopfumschaltsignals (Kopfaktivierungssignals) für den Kopf zum Lesen der Spur SS2 in drei gleiche Teile. Entsprechendes gilt für die Zeitpunkte SS1_W1 und SS1_W2 für den Kopf zum Lesen von Spuren SS1. Fällt eines dieser Signale ganz aus, ist dies ein Zeichen für die Bandantriebslogik 14, daß die Leseköpfe etwa um das Drittel einer Spurbreite von der gewollten Standbildposition abweichen. Werden zu allen Zeitpunkten Pegelmeßwerte geliefert, wird das Verhältnis zwischen einem Hüllkurvenpegel für die eine Spur und einem Hüllkurvenpegel für die andere Spur berechnet, z. B. das Verhältnis SS2_W1/SS1_W2. Dieses Verhältnis sei bei richtiger Positionierung z. B. 1/0,9. Stellt die Bandantriebslogik 14 fest, daß dieses Pegelverhältnis vorliegt, betrachtet sie die erzielte Standbildposition als ideal. Wird ein anderes Verhältnis gemessen, wird aus der Abweichung vom Verhältnis 1/0,9 ein Bandpositions-Korrekturwert berechnet.

In der Praxis tritt immer wieder der Fall auf, daß die Hüllkurvenpegel für die FM-Signale von Spuren SS2 und SS1 nicht gleich sind. In Fig. 4d ist ein Fall eingezeichnet, bei dem bei Laufbildbetrieb der Hüllkurvenpegel für Spuren SS1 geringer ist als für Spuren SS2. Für die Spuren SS2 ist angenommen, daß der Pegel derselbe ist wie für Spuren SS2 im Fall von Fig. 4b. Damit ist auch für den zugehörigen Fall eines Standbildes der Pegelverlauf für Spuren SS2, wie er in Fig. 4e dargestellt ist, identisch mit dem Pegelverlauf im Fall von Fig. 4c. Für Spuren SS1 sind jedoch die Standbildpegel gegenüber den Standbildpegeln von Fig. 4c in demjenigen Verhältnis verringert, in dem die Laufbildpegel von Fig. d für Spuren SS1 gegenüber den entsprechenden Laufbildpegeln von Fig. 4b verringert sind. Es sei angenommen, daß das Verhältnis SS2_W1/SS1_W2 (Laufbild) im Fall der Laufbildwiedergabe 0.8/1 ist. Eine herkömmliche Bandantriebslogik versucht auch in diesem Fall für Standbildbetrieb das Verhältnis SS2_W1/ SS1_W2 = 1/0,9 einzustellen. Dies führt dazu, daß die Laufspur LS relativ zu den Schrägspuren SS1 und SS2 so weit verschoben wird, daß sich das vorgegebene Soll-Pegelverhältnis von 0,9 wieder einstellt. Dann ist jedoch die Lesespur so schlecht relativ zu den Schrägspuren positioniert, daß es zu Störstreifen kommt, die vom Ober- und Unterrand eines dargestellten Bildes bis weit in Richtung der Mitte des Bildes reichen. Dieser Fall ist durch die Figuren 3.SS2, 3.SS1 und 4f veranschaulicht.

Der eben genannte Nachteil wird dann vermieden, wenn die im Laufbildpegelspeicher 12 gespeicherte Information über die Pegel bei Laufbildwiedergabe gemäß Fig. 4d verwendet wird. Die Bandantriebslogik 14 versucht dann nämlich nicht, auf den Verhältniswert 0,9 einzustellen, sondern auf den Verhältniswert 0`9/ 0,8. Damit bleibt die optimale Position erhalten, wie sie in Fig. 4e dargestellt ist. Weicht das Verhältnis SS2_W1/SS1_W2 vom gewünschten Verhältnis 0.8 / 0.9 ab, berechnet die Bandantriebslogik in herkömmlicher Weise aus der Abweichung zwischen Ist-Pegelverhältnis und Soll-Pegelverhältnis einen Bandpositions-Korrekturwert und nutzt diesen zur Korrektur, sei es in automatischen Standbildwechselschritten oder in Standbildwechselschritten, die von einem Benutzer ausgelöst werden.

In der Darstellung von Fig. 4 wurde davon ausgegangen, daß für jede Spur Meßwerte bei zwei Winkellagen erfaßt werden. Im Prinzip würde es ausreichen, jeweils nur bei einem Winkelwert für jede Spur zu messen. Mehrere Meßstellen empfehlen sich jedoch, insbesondere dann, wenn kompliziertere Formen der Hüllkurvenverläufe zu erwarten sind, was in der Regel der Fall ist, wie weiter oben erläutert. Es ist nicht erforderlich, daß die Winkellagen für Spuren SS1 dieselben sind wie für Spuren SS2, jeweils relativ zum zugehörigen Kopfumschaltpuls. Wesentlich ist nur, daß für Laufbildbetrieb und Standbildbetrieb die Winkellage jeweils dieselbe ist.

Das Blockschaltbild gem. Fig. 1 weist zwei besondere Speicher aus, nämlich einen Laufbildpegelspeicher 12 und einen Standbildpegelspeicher 13. Bei dieser Darstellung ist davon ausgegangen, daß die Pegelwerte für alle Meßstellen gespeichert werden, um sie anschließend verarbeiten zu können. Es reicht jedoch aus, im Laufbildbetrieb nur einen einzigen Pegel für eine Art Spur zwischenzuspeichern, aus dem zwischengespeicherten Wert und einem gemessenen Pegel für die andere Art Spur einen Verhältniswert zu berechnen und diesen abzuspeichern, um ihn mit einem entsprechend gewonnenen Wert für Standbildbetrieb vergleichen zu können. Aus den Meßwerten müssen nicht notwendigerweise Verhältniswerte gebildet werden, sondern Istpegel können auch unmittelbar mit Sollpegeln verglichen werden, um dann aus Differenzen zwischen absoluten Pegelwerten statt zwischen Pegelverhältniswerten einen jeweiligen Bandpositions-Korrekturwert zu berechnen.

Das Flußdiagramm gemäß Fig. 5 faßt das beschriebene Verfahren zusammen. Dabei ist davon ausgegangen, daß für Pegel-Sollwerte und -Istwerte Pegelverhältnisse zugrunde gelegt werden. Außerdem ist angenommen, daß die zwei unterschiedlichen Arten von Spuren jeweils einem Halbbild eines darzustellenden Bildes zugeordnet sind.

In einem Schritt s1 werden Laufbildpegel gemessen und gespeichert. Aus Messungen für vorgegebene Winkellagen in aufeinanderfolgenden Halbbildern werden Laufbild-Pegelverhältnisse berechnet (Schritt s2). Stellt sich in einem Überprüfungsschritt s3 heraus, daß noch kein Standbildbetrieb gewünscht wird, werden die Schritte s1 und s2 laufend wiederholt, um sicherzustellen, daß dauernd der aktuellste Verhältniswert zur Verfügung steht. Stellt sich im Überprüfungsschritt s3 heraus, daß auf Standbildbetrieb umgeschaltet wurde, werden in einem Schritt s4 Standbildpegel bei den vorgegebenen Winkellagen gemessen und diese Pegel werden gespeichert. Aus den Meßwerten für diejenigen Winkellagen, die zum Berechnen des Pegelverhältnisses in Schritt s2 zugrunde lagen, werden in einem Schritt s5 Pegelverhältnisse für Standbildbetrieb berechnet. Aus Abweichungen zwischen den so gewonnenen Pegel-Istwerten und den in Schritt s2 gewonnenen Pegel-Sollwerten wird in einem Schritt s6 ein Bandpositions-Korrekturwert berechnet, mit dessen Hilfe in einem Schritt s7 eine Bandpositionskorrektur ausgeführt wird.

Es wird darauf hingewiesen, daß die in Schritt s6 verwendeten Pegelsollwerte nicht exakt mit den in Schritt s2 berechneten Verhältniswerten übereinstimmen müssen. Dies ist nur dann der Fall, wenn die Geometrie der Abspielanordnung so gewählt ist, daß bei optimaler Positionierung im Standbildbetrieb Hüllkurven erhalten werden, die in bezug auf die Lage der Vorderflanke eines Kopfumschaltpulses spiegelsymmetrisch sind. Fehlt es jedoch an solcher Spiegelsymmetrie, was z. B. bei Fig. 4c der Fall ist, ergeben sich zwar für die bei jeweils gleichen relativen Winkellagen im Laufbildbetrieb gemessenen Pegel gleiche Werte, jedoch ist aufgrund der fehlenden Symmetrie bei Standbildwiedergabe ein Verhältniswert zu erwarten, der vom Wert 1, wie er für die Laufbildpegel vorliegt, abweicht. Dieser durch die Wiedergabegeometrie bedingte Verhältniswert hat beim Ausführungsbeispiel gemäß Fig. 4c den Wert 0,9. Dieser Wert wurde bereits bei bekannten Videorecordern mit automatischer Standbildpositionierung berücksichtigt. Mit diesem geometrisch bedingten Verhältniswert werden die in Schritt s2 ermittelten Verhältniswerte modifiziert, um zu Pegelsollwerten zu gelangen.

Es sei darauf hingewiesen, daß selbst bei nicht spiegelsymmetrischer Ausbildung der Standbildpegel dennoch ein Verhältniswert von 1 als Sollwert auftreten könnte. Dann müßte jedoch das Verhältnis aus Pegeln gebildet werden, die für die verschiedenen Schrägspuren bei unterschiedlichen relativen Winkellagen in bezug auf den jeweiligen Kopfumschaltpuls gemessen werden. Ein derartiges Vorgehen ist in der Praxis jedoch unzweckmäßig, da es einfacher ist, immer bei denselben relativen Winkellagen zu messen.

## Patentansprüche

1. Videorecorder mit
- einer Bandlaufsteuereinrichtung (11, 12, 13, 14)
-- zum Steuern der Laufgeschwindigkeit eines Magnetbandes, auf dem Schrägspuren (SS1, SS2) aufgezeichnet sind, u. a. abhängig von Kopfumschaltpulsen (Fig. 3a), die nach jeweils 180° Umdrehung einer mit Leseköpfen versehenen Kopftrommel ausgegeben werden,
-- zum Erfassen von Pegeln der Hüllkurve eines durch die Leseköpfe gelesenen FM-Signales bei mehreren vorgegebenen Winkellagen (SS2_W1, SS2_W2, SS1_W1, SS1_W2) der Köpfe in bezug auf die Kopfumschaltpulse,
-- zum Berechnen von Bandpositions-Korrekturwerten für Standbildwiedergabe aus Abweichungen zwischen den gemessenen Standbildpegeln und Pegel-Sollwerten für die vorgegebenen Winkellagen,
-- und zum Ausführen von Bandpositionskorrekturen bei Standbildbetrieb, abhängig vom jeweiligen Bandpositions-Korrekturwert,
- und einer Umschalteinrichtung (10) zum Umschalten der Bandlaufsteuereinrichtung zwischen Laufbildbetrieb und Standbildbetrieb,
**dadurch gekennzeichnet,** daß
- die Bandlaufsteuereinrichtung (11, 12, 13) so ausgebildet ist, daß sie
-- im Laufbildbetrieb die Pegel der FM-Signal-Hüllkurve bei den vorgegebenen Winkellagen (SS2_W1, SS2_W2, SS1_W1, SS1_W2) erfaßt,
-- und die Pegel-Sollwerte aus diesen gemessenen Laufbildpegeln berechnet.

2. Videorecorder nach Anspruch 1, **dadurch gekennzeichnet,** daß die Bandlaufsteuereinrichtung (11, 12, 13, 14) so ausgebildet ist, daß sie als Pegel-Sollwerte und Pegel-Istwerte Verhältnisse aus jeweils zwei Pegeln bildet, von denen der eine vom FM_Signal vom einen Lesekopf und der andere vom FM-Signal vom anderen Lesekopf herrührt.

## Claims

1. Video recorder having
- a tape motion control device (11, 12, 13, 14)
-- for controlling the running speed of a magnetic tape on which inclined tracks (SS1, SS2) are recorded, *inter* *alia*, in accordance with head switching pulses (Fig. 3a) which are output every 180° revolution of a head drum fitted with read heads,
-- for detecting levels of the envelope curve of an FM signal read by the read heads at several predetermined angular positions (SS2_W1, SS2_W2, SS1_W1, SS1_W2) of the heads in relation to the head switching pulses,
-- for calculating tape position correction values for freeze frame playback from deviations between the measured freeze frame levels and level setpoints for the predetermined angular positions,
-- and for applying tape position corrections in the freeze frame mode in relation to the respective tape position correction value,
- and a switching device (10) for switching over the tape motion control device between the moving picture mode and the freeze frame mode,
**characterised in that**
- the tape motion control device (11, 12, 13) is constructed in such a way that it
-- detects the level of the envelope curve of the FM signal in the moving picture mode at the predetermined angular positions (SS2_W1, SS2_W2, SS1_W1, SS1_W2),
-- and calculates the level setpoints from these measured moving picture mode levels.

2. Video recorder according to Claim 1, **characterised in** **that** the tape motion control device (11, 12, 13, 14) is constructed in such a way that it generates, as level setpoints and level actual-values, ratios between each of two levels, of which one level stems from the FM signal of one read head and the other level stems from the FM signal of the other read head.

## Revendications

1. Enregistreur vidéo comprenant
- un dispositif de commande de défilement de bande (11,12, 13 14)
-- pour commander la vitesse de défilement d'une bande magnétique sur laquelle sont enregistrées des pistes inclinées (SS1, SS2), entre autres en fonction d'impulsions de commutation de têtes (fig. 3a) qui sont délivrées après chaque rotation de 180° d'un tambour de têtes pourvu de têtes de lecture,
-- pour déterminer des niveaux de l'enveloppante d'un signal MF lu par les têtes de lecture avec plusieurs positions angulaires (SS2_W1, SS2_W2, SS1_W1, SS1_W2) prédéterminées des têtes par rapport aux impulsions de commutation de têtes,
-- pour calculer des valeurs de correction de position de bande pour une reproduction avec arrêt sur image à partir d'écarts entre les niveaux d'image fixe mesurés et des valeurs de consigne de niveau pour les positions angulaires prédéterminées,
-- et pour exécuter des corrections de position de bande en mode d'arrêt sur image en fonction de la valeur de correction de position de bande considérée,
- et un dispositif de commutation (10) pour commuter le dispositif de commande de défilement de bande entre un mode de défilement de l'image et un mode d'arrêt sur image,
**caractérisé** par le fait que
- le dispositif de commande de défilement de bande (11, 12, 13) est réalisé de telle sorte qu'il
-- détermine en mode de défilement de l'image les niveaux de l'enveloppante du signal MF aux positions angulaires (SS2_W1, SS2_ W2, SS1_W1, SS1_W2) prédéterminées,
-- et calcule les valeurs de consigne de niveau à partir de ces niveaux mesurés en mode de défilement de l'image.

2. Enregistreur vidéo selon la revendication 1, **caractérisé** par le fait que le dispositif de commande de défilement de bande (11, 12, 13, 14) est réalisé de telle sorte qu'il forme comme valeurs de consigne de niveau et comme valeurs réelles de niveau des rapports entre deux niveaux dont l'un provient du signal MF d'une tête de lecture et l'autre du signal MF de l'autre tête de lecture.
